# EUROPEAN PATENT SPECIFICATION

(11) **EP 2 937 316 B1**
(45) Date of publication and mention of the grant of the patent: **30.01.2019**
(21) Application number: 13866458.6
(22) Date of filing: 04.12.2013
(51) Int. Cl.: C02F 1/44, B01D 17/00, B01D 61/00, B01D 67/00, B01D 69/02, B01D 71/02, C02F 1/28

(54) **METHOD FOR TREATING WATER CONTAINING WATER-INSOLUBLE SUBSTANCE**
VERFAHREN ZUR BEHANDLUNG VON WASSER MIT EINER WASSERUNLÖSLICHEN SUBSTANZ
PROCÉDÉ DE TRAITEMENT D'EAU CONTENANT UNE SUBSTANCE HYDRO-INSOLUBLE

(30) Priority: 21.12.2012 JP 2012279208
(43) Date of publication of application: 28.10.2015
(73) Proprietor: Chiyoda Corporation, Kanagawa 220-8765 (JP); Metawater Co., Ltd., Tokyo 101-0041 (JP)
(72) Inventor: TSUDA, Kanako, Yokohama-shi Kanagawa 220-8765 (JP); SHINOHARA, Masayo, Yokohama-shi Kanagawa 220-8765 (JP); SHIMURA, Mitsunori, Yokohama-shi Kanagawa 220-8765 (JP); HIRAYAMA, Teruyasu, Yokohama-shi Kanagawa 220-8765 (JP); NONAKA, Norimasa, Tokyo 101-0041 (JP); ISHIKAWA, Fuyuhiko, Tokyo 101-0041 (JP); MIMA, Satoru, Tokyo 101-0041 (JP)
(74) Representative: Jones, Nicholas Andrew
(86) International application number: PCT/JP2013/082648
(87) International publication number: WO 2014/097890

(56) References cited:
- JP-A- H01 139 107
- JP-A- H05 245 472
- JP-A- 2004 321 950
- JP-A- 2010 214 255
- US-A- 5 190 813
- US-A- 6 026 968
- US-A1- 2008 156 721
- US-A1- 2011 168 626

## Description

### Technical Field

The present invention relates to a method for treating water containing water-insoluble substance and a method for producing a porous body for use in treatment of water containing water-insoluble substance.

### Background Art

A technique for removing water-insoluble matter from water containing water-insoluble substance has a very wide application and is utilized in various fields. For example, produced water discharged from well sites in crude oil- or natural gas-producing field contains water-insoluble substance typified by oil, and therefore cannot be directly dumped into rivers or the sea. Therefore, various separation processes are applied to treatment for removing oil from oil-containing produced water to obtain water containing substantially no oil.

As a conventional method for treating oil-containing produced water, a method is used, in which solid matter and free oil are separated by a physical separation means such as a phase separation method and then, as described in Patent Literature 1, a flocculant is added to flocculate emulsion oil to obtain water containing no oil. These phase separation method and flocculation method are established techniques that have been used since old times, and have the advantage that treatment can be stably performed with a relatively simple operation.

### Citation List

### Patent Literature

Patent Literature 1: WO 2005/092469

### Summary of Invention

### Technical Problem

However, the flocculation method has a problem that a high treatment cost is required to treat an enormous volume of water because a large amount of a chemical agent, such as a flocculant, is used, and as a result, a large amount of waste is generated. Particularly, produced water is often generated in oil-producing countries or gas-producing countries, that is, in so-called areas with insufficient infrastructures, and in addition, there is a case where produced water is required to be treated in a space-limited location, e.g., on a ship or an offshore rig, due to the development of wells having difficulty in extracting oil or gas. Therefore, there is a case where the flocculation method is unprofitable because a large space is required not only to provide a settling tank but also to store a chemical agent and the like.

Under these circumstances, the use of a porous membrane to treat oil-containing produced water has been studied (as disclosed for example in JP 401139107 and JP 2010 214 255). Treatment using a porous membrane basically needs only a porous membrane module and simple components, such as a tank and a pump, for supplying raw water to the porous membrane module, and does not particularly require heating and cooling during operation. Therefore, treatment using a porous membrane is expected as a space-saving and low-cost treatment technique.

However, treatment using a porous membrane cannot avoid the problem of fouling by a substance to be removed. Particularly, in the case of separation of oil as water-insoluble substance from produced water, there is a fear that sticky oil adheres to the surface of a porous membrane and the inner surface of pores. When oil adheres to the surface of a porous membrane and the inner surface of pores, pressure required to allow produced water to pass through the porous membrane is increased and therefore the power consumption of a pump is increased, which is uneconomical. Further, oil is a liquid, and therefore if pressure higher than a limit pressure is applied to the porous membrane, oil flows into and contaminates treated water. In order to avoid such problems, the porous membrane needs to be frequently backwashed to prevent water-insoluble substance from adhering to the membrane surface, and the pump needs to be stopped to wash the porous membrane with a chemical agent to remove water-insoluble substance adhering to the porous membrane. In this case, however, there is a fear that such operations significantly reduce the volume of produced water that can be treated.

In view of the above problems, it is an object of the present invention to provide a method capable of economically treating water containing water-insoluble substance by preventing fouling of a porous membrane by the water-insoluble substance to reduce pressure required to allow the water containing water-insoluble substance to pass through a porous material to reduce the power consumption of a pump and to minimize the frequency of backwashing or chemical washing of the porous material. Solution to Problem

In order to achieve the above object, the present invention is directed to a method as defined in claim 1 for treating water containing water-insoluble substance using a porous material having functional groups on its surface, the method including: a first step of bringing an aqueous solution containing ions ion-exchangeable for the functional groups into contact with the surface to attach the ions to the surface; and a second step of allowing the water containing water-insoluble substance to pass through the porous material from the surface having the ions attached thereto to remove the water-insoluble substance from the water containing water-insoluble substance.

The present disclosure is also directed to a method for producing a porous body, including: preparing a porous material having functional groups on its surface; and bringing an aqueous solution containing ions ion-exchangeable for the functional groups into contact with the surface to attach the ions to the surface. Advantageous Effects of Invention

According to the present invention, prior to allowing water containing water-insoluble substance to pass through a porous material from a surface of the porous material, an aqueous solution containing ions ion-exchangeable for functional groups on the surface is brought into contact with the surface to exchange the functional groups for the ions so that water molecules in the aqueous solution are attracted to the ions because of the charge of the ions and a water film is formed on the surface. Therefore, it is considered that since the water film repels the water-insoluble substance, it is possible to prevent the water-insoluble substance from adhering to the surface during allowing the water containing water-insoluble substance to pass through the porous material from the surface and therefore to remove the water-insoluble substance from the water containing water-insoluble substance without causing fouling of the porous material by the water-insoluble substance.

This makes it possible to reduce pressure required to allow the water containing water-insoluble substance to pass through the porous material to reduce the power consumption of a pump creating the pressure. Further, it is also possible to minimize the frequency of backwashing or chemical washing of the porous material. Therefore, the water containing water-insoluble substance can be economically treated.

### Brief Description of Drawings

Fig. 1 is a schematic flow diagram showing one specific example of a treatment process by which a method for treating water containing water-insoluble substance according to the present invention can be properly implemented.
Fig. 2 is a graph showing the dependence of the zeta potential of alumina on pH.
Fig. 3 is a graph showing a temporal change in water temperature-corrected trans-membrane pressure during filtration in a membrane treatment test in Comparative Example.
Fig. 4 is a schematic flow diagram of a dead end-type filtration tester used in a membrane treatment test in Examples.
Fig. 5 is a graph showing a temporal change in water temperature-corrected trans-membrane pressure during filtration in a membrane treatment test in Example 1.
Fig. 6 is a graph showing a temporal change in water temperature-corrected trans-membrane pressure during filtration in a membrane treatment test in Example 2.

### Description of Embodiments

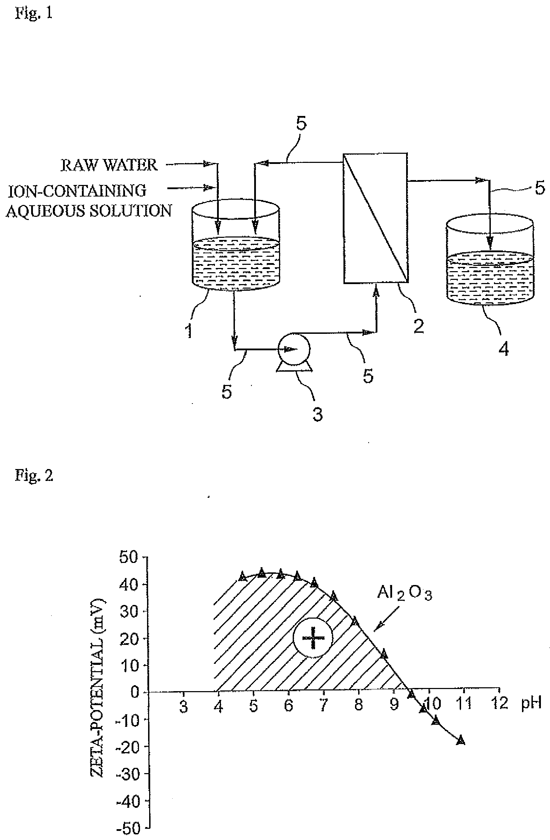

Hereinbelow, one specific example of a method for treating water containing water-insoluble substance according to the present invention will be described with reference to a case where the water containing water-insoluble substance is produced water. First, a treatment process by which the method for treating water containing water-insoluble substance according to the present invention can be properly implemented will be described with reference to Fig. 1. The treatment process shown in Fig. 1 mainly includes a raw water tank 1 that temporarily receives, as raw water, oil-containing produced water sent from a well site, a porous body 2 (hereinafter, referred to as a porous membrane) that treats the oil-containing produced water to obtain water containing substantially no oil as permeate water, a supply pump 3 that cyclically supplies raw water discharged from the bottom of the raw water tank 1 to the porous membrane 2, a permeate water tank 4 that receives permeate water passed through the porous membrane 2, and a piping system 5 that connects these components to each other.

Produced water discharged from a well site usually contains crude oil and associated gas, and therefore in order to separate them, a three-phase separator, API (American Petroleum Institute) oil separator, or the like (not shown) is generally provided upstream of the raw water tank 1. Therefore, produced water sent to the raw water tank 1 as raw water contains emulsion oil that cannot be separated by such an upstream apparatus, part of free oil that remains without being treated due to fluctuations in operating conditions, etc. Usually, the produced water as raw water contains about 1 to 5000 mg/L of oil as normal hexane extract.

The porous membrane 2 is made of an inorganic oxide, preferably ceramic such as alumina, silica, titania, or zirconia. This is because, as will be described later, the porous membrane may be fired to more strongly fix ions modifying the surface of the porous membrane, and in this case, an inorganic oxide is suitable for the porous membrane. Further, the porous membrane made of ceramic also has the advantage that it generally has higher strength than an organic membrane and therefore can withstand a high trans-membrane pressure during backwashing. It is to be noted that a backwashing system (not shown) is preferably provided on the permeate water side of the porous membrane 2 to backwash the membrane with injected compressed air.

It is preferred that the diameter of pores of the porous membrane 2 is appropriately selected depending on the properties of water containing water-insoluble substance, conditions for treatment of such water, etc. This makes it possible to allow only water to pass through the pores of the porous membrane 2 while preventing water-insoluble substance from passing through the pores of the porous membrane 2 due to cooperation between a hydrophilic coating film that will be described later and the pores, thereby allowing the water-insoluble substance and the water to be separated from each other.

The porous membrane 2 does not need to be uniformly formed or may be made of two or more materials. For example, the pores on the upstream side of the porous membrane 2 with respect to a permeation direction (i.e., a direction substantially perpendicular to the surface of the membrane) may be smaller in pore diameter and denser than the pores on the downstream side of the porous membrane 2. This allows the upstream part of the porous membrane 2 to serve as a screen and allows the downstream part of the porous membrane 2 to serve as a support layer having high mechanical strength.

The porous membrane 2 is composed of one or more modules each having a cylindrical shape with an outer diameter of, for example, about 30 mm to 180 mm and a length of, for example, about 100 mm to 1500 mm. The number of modules to be used in combination depends on the volume of raw water that needs to be treated. Each of the porous membrane modules has two or more through holes or channels each having an inner diameter of about 0.5 mm to 5 mm and extending from one end to the other end thereof. Water containing water-insoluble substance as raw water is introduced into the one end of each of the porous membrane modules and flows through the through holes in one direction at a predetermined linear velocity, during which water containing no water-insoluble substance is separated from the water containing water-insoluble substance. Concentrated water (also referred to as retentate) having a higher water-insoluble substance concentration due to the separation is discharged from the other end of each of the porous membrane modules and then returned to the raw water tank 1 through the return piping system 5.

As described above, by cyclically flowing raw water through the through holes at a predetermined linear velocity, oil that tries to accumulate on the inner wall surface of the through holes can be washed away by the raw water so that the pores of the porous membrane 2 are less likely to be blocked with oil or an oil film is less likely to be formed on the surface of the porous membrane 2 (inner wall surface of the through holes).

Hereinbelow, a method for producing the porous membrane 2 will be described. When the porous membrane 2 is produced, a porous material is first prepared. The porous material has the above-described cylindrical shape with two or more through holes, and each of the through holes has functional groups present on the inner wall surface thereof. For example, when a commercially-available ceramic porous material (manufactured by NGK INSULATORS, LTD., Type: CHME2K-01) is used, a porous material having hydroxyl groups present as functional groups on the surface thereof is obtained. It is generally known that a functional group changes in electrical potential due to the influence of pH. For example, in the case of alumina, as shown in a zeta-potential graph of Fig. 2, alumina is positively charged when the pH of an aqueous solution is lower than its isoelectric point, and on the other hand, is negatively charged when the pH of an aqueous solution is higher than its isoelectric point.

Therefore, by bringing an aqueous solution containing ions opposite in electrical charge to a charged surface of the porous material into contact with the surface, the surface can be modified with the ions electrostatically fixed thereto. Further, it is considered that a water film can be formed on the surface of the porous material because water molecules are oriented on the surface of these ions. For example, in the treatment process shown in Fig. 1, when the raw water tank 1 receives an aqueous Na₂SO₄ solution (about pH 6.5) before receiving raw water and then the aqueous solution is cyclically supplied to the porous membrane 2 using the supply pump 3 to treat the porous material made of alumina, SO₄²⁻ ions are ion-exchanged for hydroxyl groups of alumina, and water molecules are further hydrogen-bonded to the surface of ion-exchanged alumina. It is considered that this makes it possible to form a hydrophilic coating film on the surface of alumina.

When the ion-exchangeable ions are anions, one or more kinds of anions are preferably selected from the group consisting of halogen ions, SO₄²⁻, PO₄³⁻, NO₃⁻, CH₃COO⁻, and [C₆H₅O₇]³⁻. On the other hand, when the ion-exchangeable ions are cations (which is however not falling under the scope of the present invention), one or more kinds of cations are preferably selected from the group consisting of alkali metal ions, alkaline-earth metals, and Mg²⁺. In order to modify the surface of alumina with cations, the porous material made of alumina shall be treated with a cation-containing aqueous solution having a pH higher than about 9.5. This makes it possible to ion-exchange the protons of hydroxyl groups present on the surface of alumina for cations. In this case, unlike the case of modification with anions, the oxygen side of water molecules is attracted to the ion-exchanged cations so that a hydrophilic coating film is formed.

It is to be noted that adsorption of anions shifts the isoelectric point shown in Fig. 2 to the acid side, and therefore the membrane is negatively charged in the pH range of produced water. Therefore, negatively-charged oil particles are less likely to accumulate on the surface of the membrane. Further, it is considered that when cations, such as magnesium ions, having a large hydration diameter are adsorbed, an electric double layer is formed with chlorine ions or the like having a small hydration diameter so that accumulation of negatively-charged oil particles can be similarly prevented.

The isoelectric point of the porous material varies depending on the material of the porous material. For example, in the case of titania, its isoelectric point is on the more acidic side than that of alumina. Therefore, when an ion-containing aqueous solution at about neutral pH is brought into contact with the surface of the porous material made of titania, the surface of the porous material is modified with cations because the surface of the porous material is negatively charged.

As described above, after the hydrophilic coating film is formed by modification of the surface of the porous material with ions, the raw water is received in the raw water tank 1 and cyclically supplied from the raw water tank 1 to the porous membrane 2 by the supply pump 3 so that membrane treatment of the raw water can be performed. That is, the method for treating water containing water-insoluble substance according to the present invention includes: a first step of bringing an aqueous solution containing ions ion-exchangeable for functional groups into contact with the surface to attach the ions to the surface; and a second step of allowing the water containing water-insoluble substance to pass through the porous material from the surface to remove the water-insoluble substance from the water containing water-insoluble substance.

The hydrophilic coating film formed by the method described above has the property of repelling oil, and therefore oil is less likely to adhere to the surface of the porous membrane. That is, fouling is less likely to occur on the surface of the porous membrane, which makes it possible to stably perform filtration at a low trans-membrane pressure over a long time. This makes it possible to significantly reduce the power of the supply pump 3. Further, a fouling phenomenon hardly occurs, and therefore the frequency of backwashing or chemical washing can be reduced to achieve very efficient treatment.

The method for treating water containing water-insoluble substance may further include, after the first step but before the second step, the step of firing the porous material under a temperature condition of 300°C to 500°C for 1 to 5 hours. This makes it possible to more strongly fix the ions modifying the surface of the porous membrane.

Further, the method for treating water containing water-insoluble substance may further include, after the second step, the step of washing the porous membrane with a chemical solution. The chemical solution (washing agent) to be used may be Ultrasil (manufactured by HENKEL HAKUSUI CORPORATION). For example, the permeability of the porous material (ceramic membrane) that has been reduced to 50% due to filtration treatment of produced water can be recovered to 99% by washing the porous material with a circulating mixed liquid of an alkali-based washing agent (Ultrasil 110) and a surfactant (Ultrasil 02) and then with a circulating acid-based washing agent (Ultrasil 75).

Alternatively, the method for treating water containing water-insoluble substance may further include, after the second step, the step of reattaching the ions to the surface of the porous membrane. The step of reattaching the ions may be performed after the above-described step of chemical washing. When filtration treatment is performed for a long time or chemical washing is performed, there is a case where the surface composition of the porous membrane is changed. Therefore, reattaching the ions to the surface of the porous membrane makes it possible to return the trans-membrane pressure of the porous membrane to its initial low level, thereby allowing oil-containing water to be again subjected to filtration treatment stably over a long time.

The specific example of the method for treating water containing water-insoluble substance and the specific example of the method for producing a porous body for use in treatment of water containing water-insoluble substance have been described above with reference to a case where the water containing water-insoluble substance is produced water, but the present invention is not limited to these specific examples, and various embodiments may be implemented without departing from the scope of the present invention.

Water containing water-insoluble substance to be treated by the treatment method according to the present invention is not limited to produced water, and the treatment method according to the present invention can be properly applied to seawater containing oil leaked by an oil tanker accident or an offshore rig accident or oil-containing drainage water discharged from various plants such as petroleum refining plants.

### Examples

### <Comparative Example>

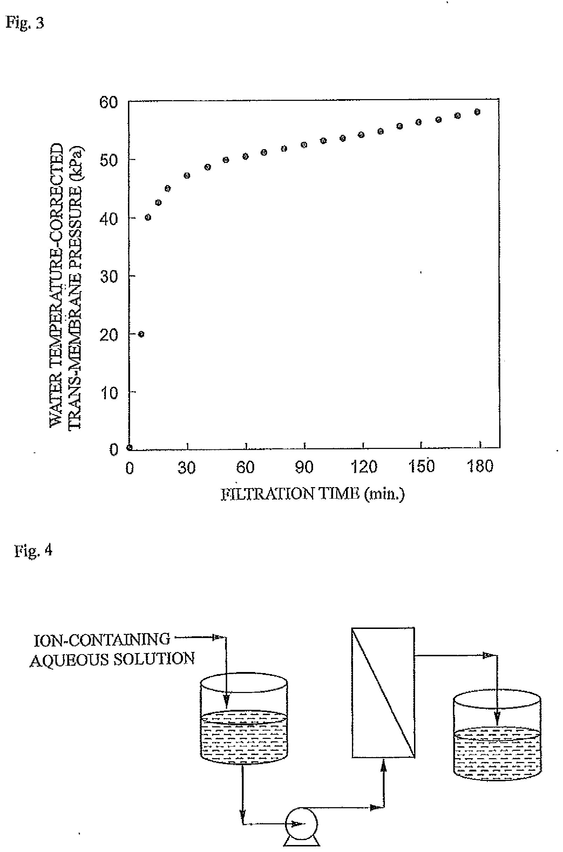

First, as Comparative Example, a ceramic porous membrane module mainly made of alumina and having an outer diameter of 3 cm and a length of 10 cm (manufactured by NGK INSULATORS, LTD., pore diameter: 0.1 µm) was set in such a cross flow-type filtration tester as shown in Fig. 1, and oilfield produced water having properties shown in the following Table 1 was treated under the conditions of a linear velocity (cross-flow linear velocity) of 3 m/sec and a filtration flux of 4 m³/m²/day for 180 minutes. A temporal change in water temperature-corrected trans-membrane pressure (trans-membrane pressure at a water temperature of 25°C) during filtration is shown in Fig. 3, and the properties of filtrate are shown in the following Table 2.

**[Table 1]**

| | |
|---|---|
| n-hexane extract concentration | 380 mg/L |
| Suspended solids concentration (SS) | 150 mg/L |
| Total organic carbon (TOC) | 560 mg/L |
| Turbidity | 220 degree |

**[Table 2]**

| | |
|---|---|
| n-hexane extract concentration | 6 mg/L |
| Suspended solids concentration (SS) | <1 mg/L |
| Total organic carbon (TOC) | 340 mg/L |
| Turbidity | 1 degree |

### <Example 1>

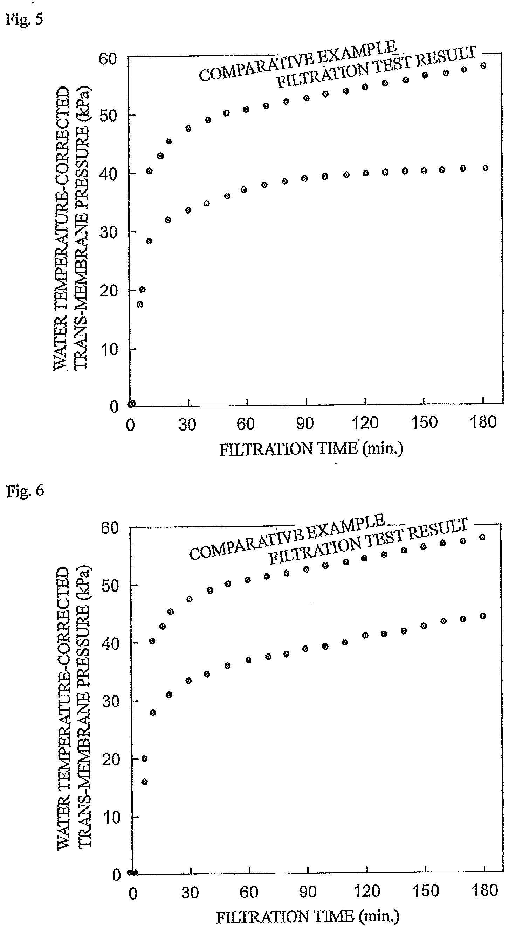

The same ceramic porous membrane module as used in Comparative Example was first set in such a dead end-type filtration tester as shown in Fig. 4, and a 16.7 wt% aqueous Na₂SO₄ solution was flowed for about 2 hours at a flow rate of 6 L/hr. Then, the ceramic membrane was transferred from the dead end-type filtration tester to such a cross flow-type filtration tester as shown in Fig. 1. Then, oilfield produced water was treated in a similar manner as in Comparative Example. A temporal change in water temperature-corrected trans-membrane pressure during filtration is shown in Fig. 5 together with the above-described result of Comparative Example. Further, the properties of permeate water are shown in the following Table 3.

**[Table 3]**

| | |
|---|---|
| n-hexane extract concentration | 7 mg/L |
| Suspended solids concentration (SS) | <1 mg/L |
| Total organic carbon (TOC) | 360 mg/L |
| Turbidity | 0.7 degree |

As can be seen from the results shown in Table 3 and Fig. 5, an increase in trans-membrane pressure can be significantly suppressed by treating the porous membrane with an aqueous solution containing ions ion-exchangeable for functional groups of the porous membrane before raw water is flowed through the porous membrane.

### <Example 2>

A treatment test of oilfield produced water was performed in a similar manner as in Example 1 except that a 26.1 wt% aqueous MgCl₂ solution was used instead of the 16.7 wt% aqueous Na₂SO₄ solution. A temporal change in water temperature-corrected trans-membrane pressure during filtration is shown in Fig. 6 together with the above-described result of Comparative Example. Further, the properties of permeate water are shown in the following Table 4.

**[Table 4]**

| | |
|---|---|
| n-hexane extract concentration | 6 mg/L |
| Suspended solids concentration (SS) | <1 mg/L |
| Total organic carbon (TOC) | 360 mg/L |
| Turbidity | 0.8 degree |

As can be seen from the results shown in Table 4 and Fig. 6, an increase in trans-membrane pressure can be significantly suppressed by treating the porous membrane with an aqueous solution containing ions ion-exchangeable for functional groups of the porous membrane before raw water is flowed through the porous membrane.

### Reference Sign List

- 1: Raw water tank
- 2: Porous membrane
- 3: Supply pump
- 4: Permeate water tank
- 5: Piping system

## Claims

1. A method for treating water containing water-insoluble substance using a porous material having functional groups on its surface, comprising:
a first step of bringing an aqueous solution containing ions ion-exchangeable for the functional groups into contact with the surface to attach the ions to the surface; and
a second step of allowing the water containing water-insoluble substance to pass through the porous material from the surface having the ions attached thereto to remove the water-insoluble substance from the water containing water-insoluble substance,
wherein the ion-exchangeable ions are one or more kinds of anions selected from the group consisting of halogen ions, SO₄²⁻, PO₄³⁻, NO₃⁻, CH₃COO⁻, and [C₆H₅O₇]³⁻;
wherein the porous material is a membrane made of an inorganic oxide; the functional group is a hydroxyl group;
the water-insoluble substance is oil; and
the water containing the water-insoluble substance is produced water or seawater containing oil leaked by an oil tanker accident or an offshore rig accident or oil-containing drainage water discharged from plants such as petroleum refining plants.

2. The method for treating water containing water-insoluble substance according to claim 1, wherein the inorganic oxide comprises alumina, silica, titania or zirconia.

3. The method for treating water containing water-insoluble substance according to claim 2, further comprising, after the first step but before the second step, a step of firing the porous material under a temperature condition of 300°C to 500°C for 1 to 5 hours.

4. The method for treating water containing water-insoluble substance according to any one of claims 1 to 3, wherein the water containing water-insoluble substance is produced water.

5. The method for treating water containing water-insoluble substance according to any one of claims 1 to 4, further comprising, after the second step, a step of washing the porous material with a chemical solution, or a step of washing the porous material with a chemical solution and then bringing the ion-containing aqueous solution into contact with the surface of the porous material to attach the ions to the surface.

## Patentansprüche

1. Verfahren zur Behandlung von eine wasserunlösliche Substanz enthaltendem Wasser unter Verwendung eines porösen Materials mit funktionellen Gruppen auf seiner Oberfläche, umfassend:
einen ersten Schritt, bei dem man eine mit den funktionellen Gruppen ionenaustauschbare Ionen enthaltende wässrige Lösung zum Anbinden der Ionen an die Oberfläche mit der Oberfläche in Kontakt bringt, und
einen zweiten Schritt, bei dem man es dem die wasserunlösliche Substanz enthaltenden Wasser gestattet, von der Oberfläche mit den daran gebundenen Ionen durch das poröse Material hindurchzutreten, zum Entfernen der wasserunlöslichen Substanz aus dem die wasserunlösliche Substanz enthaltenden Wasser,
wobei es sich bei den ionenaustauschbaren Ionen um eine oder mehrere Arten von Anionen ausgewählt aus der Gruppe bestehend aus Halogenionen, SO₄²⁻, PO₄³⁻, NO₃⁻, CH₃COO⁻ und [C₆H₅O₇]³⁻ handelt,
wobei es sich bei dem porösen Material um eine Membrane aus anorganischem Oxid handelt,
es sich bei der funktionellen Gruppe um eine Hydroxylgruppe handelt,
es sich bei der wasserunlöslichen Substanz um Öl handelt und
es sich bei dem die wasserunlösliche Substanz enthaltenden Wasser um Produktionswasser oder Seewasser mit bei einem Öltankerunfall oder einem Ölplattformunfall freigesetzten Öl oder um ölhaltiges, von Anlagen wie Petroleumraffinationsanlagen abfließendes Drainagewasser handelt.

2. Verfahren zur Behandlung von eine wasserunlösliche Substanz enthaltendem Wasser nach Anspruch 1, wobei das anorganische Oxid Aluminiumoxid, Siliciumoxid, Titanoxid oder Zirconiumoxid umfasst.

3. Verfahren zur Behandlung von eine wasserunlösliche Substanz enthaltendem Wasser nach Anspruch 2, weiterhin umfassend, nach dem ersten Schritt, jedoch vor dem zweiten Schritt, einen Schritt, bei dem man das poröse Material 1 bis 5 Stunden unter einer Temperaturbedingung von 300°C bis 500°C brennt.

4. Verfahren zur Behandlung von eine wasserunlösliche Substanz enthaltendem Wasser nach einem der Ansprüche 1 bis 3, wobei es sich bei dem eine wasserunlösliche Substanz enthaltenden Wasser um Produktionswasser handelt.

5. Verfahren zur Behandlung von eine wasserunlösliche Substanz enthaltendem Wasser nach einem der Ansprüche 1 bis 4, weiterhin umfassend, nach dem zweiten Schritt, einen Schritt, bei dem das poröse Material mit einer chemischen Lösung gewaschen wird, oder einen Schritt, bei dem das poröse Material mit einer chemischen Lösung gewaschen wird und die ionenhaltige wässrige Lösung dann zum Binden der Ionen an die Oberfläche mit der Oberfläche des porösen Materials in Kontakt gebracht wird.

## Revendications

1. Procédé pour traiter de l'eau contenant une substance insoluble dans l'eau utilisant un matériau poreux ayant des groupes fonctionnels sur sa surface, comprenant :
une première étape consistant à mettre une solution aqueuse contenant des ions échangeables par échange d'ions pour les groupes fonctionnels en contact avec la surface pour rattacher les ions à la surface ; et
une deuxième étape consistant à laisser l'eau contenant une substance insoluble dans l'eau traverser le matériau poreux depuis la surface à laquelle sont rattachés les ions pour éliminer la substance insoluble dans l'eau de l'eau contenant une substance insoluble dans l'eau,
dans lequel les ions échangeables par échange d'ions sont un ou plusieurs types d'anions choisis dans l'ensemble constitué par les ions halogène, SO₄²⁻, PO₄³⁻, NO₃⁻, CH₃COO⁻, et [C₆H₅O₇]³⁻ ;
dans lequel le matériau poreux est une membrane faite d'un oxyde inorganique ;
le groupe fonctionnel est un groupe hydroxyle ;
la substance insoluble dans l'eau est une huile ; et
l'eau contenant la substance insoluble dans l'eau est de l'eau de production ou de l'eau de mer contenant du pétrole ayant fui du fait d'un accident de pétrolier ou d'un accident d'une plate-forme pétrolière ou de l'eau de drainage contenant du pétrole évacuée d'usines telles que des raffineries de pétrole.

2. Procédé pour traiter de l'eau contenant une substance insoluble dans l'eau selon la revendication 1, dans lequel l'oxyde inorganique comprend de l'alumine, de la silice, de l'oxyde de titane ou de la zircone.

3. Procédé pour traiter de l'eau contenant une substance insoluble dans l'eau selon la revendication 2, comprenant en outre, après la première étape mais avant la deuxième étape, une étape consistant à cuire le matériau poreux à une température de 300 °C à 500 °C pendant 1 à 5 heures.

4. Procédé pour traiter de l'eau contenant une substance insoluble dans l'eau selon l'une quelconque des revendications 1 à 3, dans lequel l'eau contenant une substance insoluble dans l'eau est de l'eau de production.

5. Procédé pour traiter de l'eau contenant une substance insoluble dans l'eau selon l'une quelconque des revendications 1 à 4, comprenant en outre, après la deuxième étape, une étape consistant à laver le matériau poreux avec une solution chimique, ou une étape consistant à laver le matériau avec une solution chimique et ensuite à mettre la solution aqueuse contenant des ions en contact avec la surface du matériau poreux pour rattacher les ions à la surface.
